# EUROPEAN PATENT APPLICATION

(11) **EP 4 531 235 A1**
(43) Date of publication of application: **02.04.2025**
(21) Application number: 24201715.0
(22) Date of filing: 20.09.2024
(51) Int. Cl.: H02J 7/00, H02J 50/00, H02J 50/40

(54) **WIRELESS CHARGER**

(30) Priority: 21.09.2023 CN 202322575079 U
(71) Applicant: Anker Innovations Technology Co., Ltd., Changsha, Hunan 410000 (CN)
(72) Inventor: LI, Xiangyuan, Shenzhen (CN)
(74) Representative: Bittner, Thomas L.

(57) **Abstract**

A foldable wireless charger comprising a first housing, a second housing, a third housing, a first wireless charging device, a second wireless charging device and a third wireless charging device. The first housing has a first surface and a second surface. When the second housing is at a first position, the second housing is adjacent to the first surface; and when the second housing is at the second position, the second housing is angularly displaced from the first surface. When the third housing is at the third position, the third housing is adjacent to the second surface; and when the third housing is at the fourth position, the third housing is angularly displaced from the first surface of the first housing.

## Description

### Field

The present disclosure relates to the technical field of wireless charging, in particular to a wireless charger.

### Background

With more and more devices being provided with a wireless charging function, more and more customers and application scenarios need wireless charging. A principle of the wireless charging is that a wireless charging device transfers energy to a charged terminal device through near-field induction, and the terminal device converts the received energy into electric energy and stores it in a battery of the device. A principle of energy transfer is inductive coupling, which can ensure that no conducting interface is exposed, which can not only eliminate messy transmission lines between devices, but also improve safety performance.

With accelerated pace of people's life and continuous development of science and technology, people's pursuit of electronic products becomes more and more compact and portable. Some wireless charging devices in the related art can wirelessly charge a variety of electronic devices, but have a large overall volume and is inconvenient to carry and store.

### Summary

Based on this, it is necessary to provide a wireless charger in view of the problem that the wireless charging devices have a large volume and are inconvenient to carry and store.

Examples of the disclosure provide a wireless charger comprising: a first housing provided with a first surface and a second surface; a second housing pivotably connected to the first housing and having a first position and a second position relative to the first housing, wherein when the second housing is at the first position, the second housing is adjacent to the first surface; and when the second housing is at the second position, the second housing is angularly displaced from the first surface; a third housing pivotably connected to the first housing and having a third position and a fourth position relative to the first housing, wherein when the third housing is at the third position, the third housing is adjacent to the second surface of the first housing; and when the third housing is at the fourth position, the third housing moves to a side of the first surface of the first housing (e.g., is angularly displaced from the second surface of the first housing); a first wireless charging unit (e.g., device) in the first housing and configured to wirelessly charge a first device to be charged on the first surface; a second wireless charging unit in the second housing and configured to wirelessly charge a second device to be charged on the second housing; and a third wireless charging unit in the third housing and configured to wirelessly charge a third device to be charged on the third housing.

In an example, the wireless charger may further comprise a rotation positioning assembly disposed between the first housing and the second housing, wherein preferably a position of the second housing is switched between the first position and the second position by the rotation positioning assembly.

In an example, the rotation positioning assembly may comprise at least one of: a rotating shaft rolling piece (e.g., fixedly) connected with the first housing and fixedly provided with a stationary positioning block; and a rotating shaft piece (fixedly) connected with the second housing, rotatably connected with the rotating shaft rolling piece, and provided with a follow-up positioning block, preferably the follow-up positioning block being provided with a first rotation positioning surface and a second rotation positioning surface; wherein more preferably when the first rotation positioning surface abuts against the stationary positioning block, the second housing is in the first position. When the second rotation positioning surface abuts against the stationary positioning block, the second housing may be in the second position.

In an example, the rotation positioning assembly may further comprise a rotating bracket fixedly connecting the rotating shaft rolling piece with the first housing; and/or the rotation positioning assembly may further comprise a rotation fixing piece fixedly connecting the rotating shaft piece with the second housing.

In an example, the wireless charger may further comprise a turning assembly disposed between the first housing and the third housing, and preferably a position of the third housing may be switched between the third position and the fourth position through the turning assembly.

In an example, the turning assembly may comprise: a turning shaft fixedly connected with the third housing, and a turning sleeve fixedly connected with the first housing, the turning shaft preferably being rotatably connected with the turning sleeve.

In an example, the turning assembly further may comprise a first power supply protection assembly, and when the third housing is in the third position, the first power supply protection assembly can cut off a third power supply circuit provided by the third wireless charging unit.

In an example, the first power supply protection assembly may comprise at least one of: a first press-fit switch fixedly connected with the first housing and connected to the third power supply circuit; and a turning triggering block fixedly connected with the third housing; wherein preferably when the third housing is in the third position, the turning triggering block is separated from the first press-fit switch, the first press-fit switch is turned off, and the third power supply circuit is disconnected; and/or when the third housing is in the fourth position, the turning triggering block abuts against the first press-fit switch, the first press-fit switch is turned on, and the third power supply circuit is connected.

In an example, the wireless charger further may comprise a second power supply protection assembly, wherein when the second housing is in the first position, the second power supply protection assembly cuts off a first power supply circuit provided by the first wireless charging unit; and/or when the second housing is in the second position, the second power supply protection assembly connects the first power supply circuit.

In an example, the second power supply protection assembly may comprise at least one of: a rotary swing arm (fixedly) connected with the second housing; and a second press-fit switch connected to the first power supply circuit; wherein preferably when the second housing is in the first position, the rotary swing arm is separated from the second press-fit switch and/or the second press-fit switch is turned off, and/or the first power supply circuit is disconnected; more preferably when the second housing is in the second position, the rotary swing arm abuts against the second press-fit switch and/or the second press-fit switch is turned on and/or the first power supply circuit is connected.

According to the wireless charger of the example of the disclosure, the wireless charger has a plurality of use forms by switching and combining folding states of the first housing, the second housing, and/or the third housing. The first housing provides a base for folding and storage of the second housing and the third housing. The second housing is stored on the first surface of the first housing, and the third housing is stored on the second surface of the first housing. For example, the second wireless charging unit is stored on the first surface of the first housing along with the second housing, and the third wireless charging unit is stored on the second surface of the first housing along with the third housing. Use of the second wireless charging unit and the third wireless charging unit does not interfere with each other. The second wireless charging unit and the third wireless charging unit can be used independently or at the same time, and a space of the first surface and a space of the second surface of the first housing are fully utilized. The wireless charger is compact in structure, small in volume after being folded and convenient to carry and store, can be selectively unfolded into a plurality of use forms during use, and is more flexible and convenient to use.

### Brief Description of the Drawings

- FIG. 1: is a schematic structural view of a wireless charger with a second housing in a first position according to an example of the present disclosure.
- FIG. 2: is a schematic structural view of a wireless charger with a third housing in a second position according to an example of the present disclosure.
- FIG. 3: is a schematic structural view of a wireless charger with a second housing in a second position and a third housing in a fourth position according to an example of the present disclosure.
- FIG. 4: is a schematic structural view of a wireless charger during charging according to an example of the present disclosure.
- FIG. 5: is a schematic structural view of a rotation positioning assembly in a wireless charger according to an example of the present disclosure.
- FIG. 6: is a schematic structural view of a rotating shaft rolling piece and a bracket board in a wireless charger according to an example of the disclosure.
- FIG. 7: is a schematic structural view of a rotating shaft piece in a wireless charger according to an example of the present disclosure.
- FIG. 8: is a schematic structural view of a rotating shaft rolling piece and a rotating shaft piece in a wireless charger according to an example of the present disclosure.
- FIG. 9: is a partially enlarged schematic view at A in FIG. 8.
- FIG. 10: is a schematic structural view of a turning assembly in a wireless charger according to an example of the present disclosure.
- FIG. 11: is a schematic structural view of a wireless charger with a mounting cover plate removed according to an example of the present disclosure.
- FIG. 12: is a partially enlarged schematic view at B in FIG. 11.
- FIG. 13: is a schematic structural view showing a rotary swing arm embodied in a wireless charger according to an example of the present disclosure.
- FIG. 14: is a partially enlarged schematic view at C in FIG. 13.
- FIG. 15: is a schematic structural view of a second power supply protection assembly embodied in a wireless charger according to an example of the present disclosure.
- FIG. 16: is a schematic view of a rotary swing arm in an initial position in a wireless charger according to an example of the present disclosure.
- FIG. 17: is a schematic view of a rotary swing arm in a triggered position in a wireless charger according to an example of the present disclosure.
- FIG. 18: is a schematic view of a wireless charger in a fully folded storage state according to an example of the present disclosure.
- FIG. 19: is a schematic view of a wireless charger in a semi-folded storage state according to an example of the present disclosure.
- FIG. 20: is a schematic view of a wireless charger in another semi-folded storage state according to an example of the present disclosure.
- FIG. 21: is a schematic view of a wireless charger in an unfolded storage state according to an example of the present disclosure.

### Reference Numerals:

1. first housing; 11. first surface; 12. second surface; 121. storage tank; 13. press-fit through groove;
2. second housing;
3. third housing; 31. turning cantilever; 311. mounting cavity; 312. mounting cover plate; 32. handle;
4. first wireless charging unit; 41. first device to be charged;
5. second wireless charging unit; 51. second device to be charged;
6. third wireless charging unit; 61. third device to be charged;
7. rotation positioning assembly; 71. rotating shaft rolling piece; 711. stationary positioning block; 712. decorative plate; 713. extension plate; 72. rotating shaft piece; 720. shaft body; 721. follow-up positioning block; 7211. first rotation positioning surface; 7212, second rotation positioning surface; 722. fixed block; 73. rotating bracket; 731. bracket board; 732. support base; 74. rotation fixing piece;
8. turning assembly; 81. turning shaft; 811. second mounting plate; 82. turning sleeve; 821. first mounting plate; 83. first power supply protection assembly; 831. first press-fit switch; 8311. first trigger; 832. turning triggering block;
9. second power supply protection assembly; 91. rotary swing arm; 92. second press-fit switch; 921. second trigger.

### Detailed Description

In order to make the above objects, features and advantages of the present disclosure more obvious and easier to understand, specific examples of this disclosure will be described in detail in combination with drawings in the following. In following description, numerous specific details are set forth in order to provide thorough understanding of the present disclosure. However, this disclosure can be implemented in many other ways different from those described herein, and similar improvements can be made by those skilled in the art without departing from connotation of this disclosure, and thus this disclosure is not limited by specific examples disclosed below.

In the description of the present application, it should be understood that an orientation or positional relationship indicated by the term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial", "radial", "circumferential", or the like is based on an orientation or positional relationship shown in the accompanying drawings, and is merely for ease of describing the present application and simplifying the description, but does not indicate or imply that an apparatus or an element referred to must have a specific orientation or be constructed and operated in a specific orientation, and therefore cannot be understood as a limitation on the present application.

In addition, the terms "first" and "second" are only for the purpose of description, and cannot be understood as indicating or implying the relative importance or implicitly indicating the quantity of the indicated technical features. Therefore, a feature defined by "first" or "second" may explicitly or implicitly include at least one such feature. In the description of the present application, "a plurality of' means at least two, such as two or three, unless otherwise specified.

In the present application, unless otherwise specified and defined, the terms "mount", "connect", "fix", and the like should be understood in a broad sense. For example, the "connection" may be fixed connection, detachable connection, integration, mechanical connection, electrical connection, direct connection, connection by a medium, internal communication of two elements, or interaction between two elements, unless otherwise expressly defined. Those of ordinary skill in the art can understand the specific meanings of the above terms in the present application according to specific circumstances.

In the present application, unless otherwise expressly specified and defined, that a first feature is "above" or "below" a second feature means that the first feature and the second feature are in direct contact, or are in indirect contact through a medium. Moreover, the first feature "on", "above", and "up" the second feature may be the first feature right above or obliquely above the second feature, or merely indicates that the level of the first feature is higher than that of the second feature. The first feature "below", "under", and "down" the second feature may be the first feature right below or obliquely below the second feature, or merely indicates that the level of the first feature is lower than that of the second feature.

It should be noted that when one element is referred to as being "fixed to" or "disposed on" on other element, the element may be directly on the other element or there is a medium element between them. When one element is considered to be "connected" to other element, the element may be directly connected to the other element or there is a medium element between them. The terms "vertical", "horizontal", "up", "down", "left", "right", and similar expressions used in the present application are for illustrative purposes only and do not imply unique implementations.

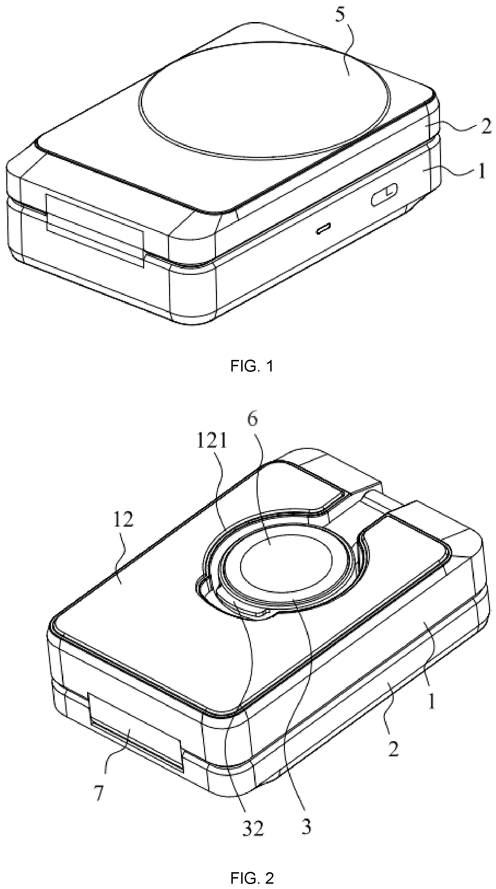

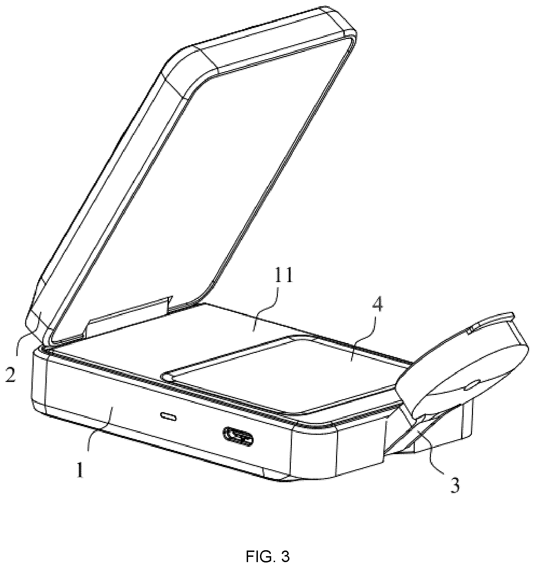

Referring to FIGS. 1, 2 and 3, FIG. 1 shows a schematic structural view of a wireless charger with a second housing 2 in a first position according to an example of the present disclosure. FIG. 2 shows a schematic structural view of a wireless charger with a third housing 3 in a second position according to an example of the present disclosure. FIG. 3 shows a schematic structural view of a wireless charger with a second housing 2 in a second position and a third housing 3 in a fourth position according to an example of the present disclosure. An example of the disclosure provides a wireless charger including a first housing 1, a second housing 2 and a third housing 3. The first housing 1 is provided with a first surface 11 (e.g., inner surface) and a second surface 12 (e.g., outer surface). The second housing 2 is movably (e.g., pivotably) connected to the first housing 1. The second housing 2 has a first position (e.g., closed position, folded position) and a second position (open position, unfolded position) relative to the first housing 1. Referring to FIG. 1, when the second housing 2 is in the first position, the second housing 2 and the first surface 11 fit together (e.g., the second housing 2 is in contact with and/or adjacent to the first surface 11). Referring to FIG. 3, when the second housing 2 is in the second position, the second housing 2 is separated from the first surface 11 (e.g., the first surface of the first housing is exposed). The third housing 3 has a third position (e.g., closed position, folded position) and a fourth position (open position, unfolded position) relative to the first housing 1. Referring to FIG. 2, when the third housing 3 is in the third position, the third housing 3 the second surface 12 fit together (e.g., the third housing 3 is in contact with and/or adjacent to the second surface 12). Referring to FIG. 3, when the third housing 3 is in the fourth position, the third housing 3 moves to a side of the first surface 11 of the first housing 1 (e.g., the third housing 3 is connected to the first housing 1 via a shaft). The first housing comprises first and second opposing ends. The second housing is pivotably coupled to the first end of the first housing, and the third housing is pivotably coupled to the second end of the first housing.

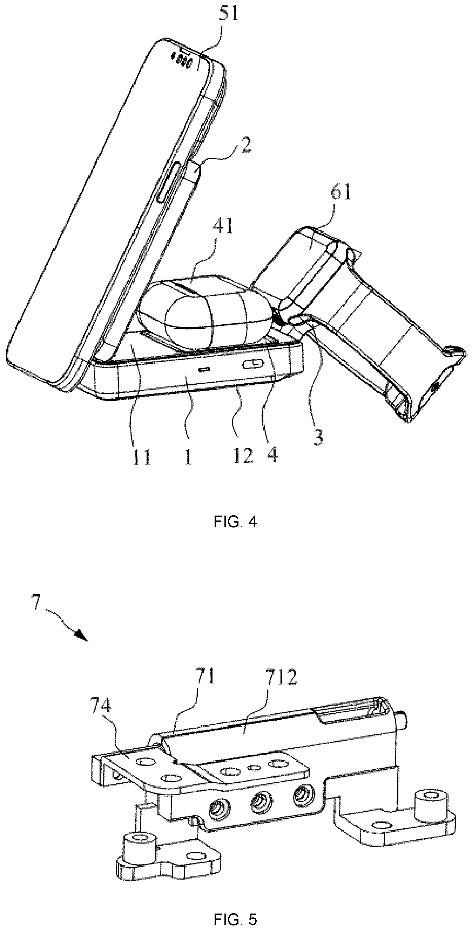

Referring to FIG. 3 and FIG. 4, FIG. 4 shows a schematic structural view of a wireless charger during charging according to an example of the present disclosure. The wireless charger further includes a first wireless charging unit 4 (e.g., a first wireless charging device), a second wireless charging unit 5 (e.g., a second wireless charging device) and a third wireless charging unit 6 (e.g., a third wireless charging device). The first wireless charging unit 4 is disposed on (e.g., in) the first housing 1, and is configured to wirelessly charge a first electronic device to be charged 41 on the first surface 11. The second wireless charging unit 5 is disposed on (e.g., in) the second housing 2 and is configured to wirelessly charge a second electronic device to be charged 51 on the second housing 2. The third wireless charging unit 6 is disposed on (e.g., in) the third housing 3 and is configured to wirelessly charge a third electronic device 61 to be charged on the third housing 3.

According to the wireless charger of the example of the disclosure, the wireless charger has a plurality of use forms by switching and combining folding states of the first housing 1, the second housing 2, and/or the third housing 3. The first housing 1 provides a base for folding and storage of the second housing 2 and the third housing 3. The second housing 2 is stored on (e.g., in close contact with, located on, rests on) the first surface 11 of the first housing 1, and the third housing 3 is stored on the second surface 12 of the first housing 1. The second wireless charging unit 5 is stored on the first surface 11 of the first housing 1 along with the second housing 2, and the third wireless charging unit 6 is stored on the second surface 12 of the first housing 1 along with the third housing 3. Use of the second wireless charging unit 5 and the third wireless charging unit 6 does not interfere with each other. The second wireless charging unit 5 and the third wireless charging unit 6 can be used independently or at the same time, and a space of the first surface 11 and a space of the second surface 12 of the first housing 1 are fully utilized. The wireless charger is compact in structure, small in volume after being folded and convenient to carry and store, can be selectively unfolded into a plurality of use forms during use, and is more flexible and convenient to use.

In some examples, the first wireless charging unit 4 is configured as a wireless charging unit for an earphone case, the second wireless charging unit 5 is configured as a wireless charging unit for a mobile phone, and the third wireless charging unit 6 is configured as a wireless charging unit for a watch. Correspondingly, the first device to be charged 41 is configured as an earphone case , earphone, or headphone, that can be wirelessly charged, the second device to be charged 51 is configured as a mobile phone that can be wirelessly charged, and the third device to be charged 61 is configured as a watch (e.g., a smart watch) that can be wirelessly charged. It can be understood that the first wireless charging unit 4, the second wireless charging unit 5 and the third wireless charging unit 6 can also be configured as wireless charging units with other functions to wirelessly charge other devices to be charged corresponding to the functions.

In some examples, when the second housing 2 is in the second position, a first included angle is formed between the second housing 2 and the first surface 11 and may be 60 degrees. A magnetic attraction structure is provided in the second housing 2 and can attract the second device to be charged 51 onto a surface of the second housing 2 away from the first housing 1, which prevents the second device to be charged 51 from falling or moving. When the second device 51 to be charged is configured as a mobile phone, the magnetic attraction structure provided in the second housing 2 makes the second housing 2 have a magnetic attraction function, so as to attract the mobile phone and prevent the mobile phone from falling. The mobile phone is attracted on an inclined surface of the second housing 2. At this time, the inclined second housing 2 in the wireless charger has a function as a mobile phone stand, so that the mobile phone can be wirelessly charged while being operated or watched by a user, which can meet charging requirements of mobile phones with different sizes in the market. It can be understood that the second housing 2 can be provided with a limiting protrusion which acts as a limit support for a bottom of the mobile phone, so as to prevent the mobile phone from slipping in an inclined state, which will not be described in detail herein.

It can be understood that while the second housing 2 is inclined, a space between the second housing 2 and the first surface 11 of the first housing 1 is opened, so that the first device to be charged 41 can be placed on the first surface 11, and the first wireless charging unit 4 can charge the first device to be charged 41 on the first surface 11.

Referring to FIG. 2, in some examples, the first housing 1 is provided with a storage tank 121 (e.g., a storage space, a storage cavity, storage recess) on a second side wall thereof for the third housing 3 to be embedded in. When the third housing 3 is in the third position, the third housing 3 is completely stored in the storage tank 121, further improving structural compactness of the wireless charger. The third housing 3 is fixedly provided with a handle 32, and a gap is provided between the handle 32 and the storage tank 121, which is convenient for a user to operate.

Referring to FIGS. 3 and 4, in some examples, when the third housing 3 is in the fourth position, a second included angle is formed between the third housing 3 and the first surface 11, which may also be 60 degrees, that is, the third housing 3 is turned 240 degrees from the second surface 12 of the first housing 1 to the fourth position. When the third device to be charged 61 is configured as a watch that can be wirelessly charged, a dial can be hung on the inclined third housing 3 and a watch band is supported on a desktop to form support. It can be understood that the third housing 3 can also be provided with a magnetic attraction structure for attracting the watch. The third housing 3 in the fourth position has a function of a watch stand, so that the watch can be wirelessly charged while information on the dial can be conveniently watched by a user. The third housing 3 can be provided with a limiting protrusion which acts as a limit support for a bottom of the dial of the watch, so as to prevent the watch from slipping in an inclined state, which will not be described in detail herein.

Referring to FIG. 5, FIG. 5 shows a structural schematic view of a rotation positioning assembly 7 in a wireless charger according to an example of the present disclosure. In some examples, the wireless charger further includes a rotation positioning assembly 7 disposed between the first housing 1 and the second housing 2. A position of the second housing 2 is switched between the first position and the second position by the rotation positioning assembly 7, so that the second housing 2 is in the first position or the second position.

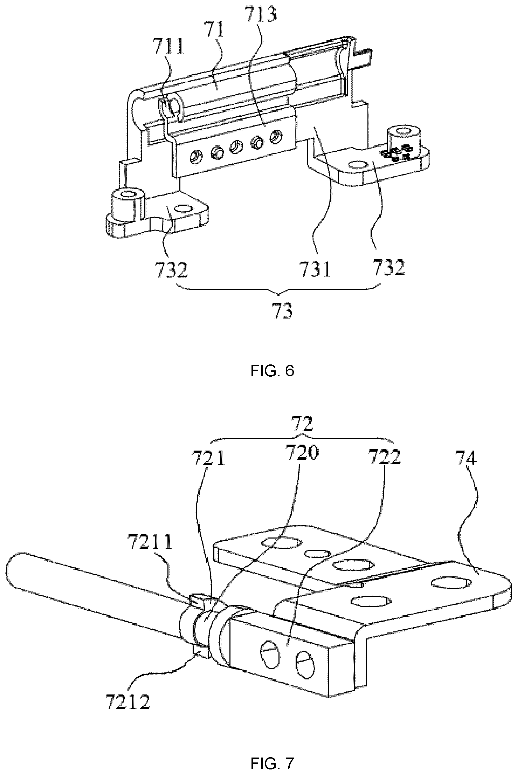

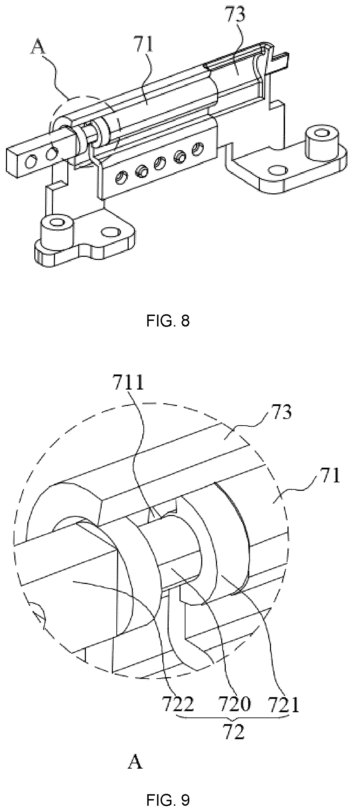

Referring to FIGS. 5, 6, and 7, FIG. 6 shows a schematic structural view of a rotating shaft rolling piece 71 (e.g., a first rotating shaft, a rotating shaft cylindrical component) and a bracket board 731 in a wireless charger according to an example of the disclosure. FIG. 7 shows a schematic structural view of a rotating shaft piece 72 (e.g., a second rotating shaft) in a wireless charger according to an example of the present disclosure. In some examples, the rotation positioning assembly 7 includes a rotating shaft rolling piece 71 and a rotating shaft piece 72, the rotating shaft rolling piece 71 is fixedly connected with the first housing 1, and the rotating shaft rolling piece 71 is fixedly provided with a stationary positioning block 711. Referring to FIG. 8 and FIG. 9, FIG. 8 shows a schematic structural view of a rotating shaft rolling piece 71 and a rotating shaft piece 72 in a wireless charger according to an example of the present disclosure, and FIG. 9 shows a partially enlarged schematic view at A in FIG. 8. The rotating shaft piece 72 is fixedly connected with the second housing 2, and the rotating shaft piece 72 is rotatably connected with the rotating shaft rolling piece 71. Specifically, the rotating shaft piece 72 includes a shaft body 720, a follow-up positioning block 721 and a fixed block 722. The follow-up positioning block 721 is fixedly disposed on a circumferential outer wall of the shaft body 720. One end of the shaft body 720 is configured to be rotatably connected with the rotating shaft rolling piece 71; the other end of the shaft body 720 is fixedly connected with the fixed block 722. The fixed block 722 is configured to be fixedly connected with the second housing 2. The rotating shaft piece 72 is fixedly connected with the second housing 2 through the fixed block 722.

The follow-up positioning block 721 is provided with a first rotation positioning surface 7211 and a second rotation positioning surface 7212. When the first rotation positioning surface 7211 abuts against the stationary positioning block 711, the second housing 2 is in the first position. When the second rotation positioning surface 7212 abuts against the stationary positioning block 711, the second housing 2 is in the second position. For example, when the first included angle is 60 degrees, after the follow-up positioning block 721 is rotated 60 degrees, a case where the first rotation positioning surface 7211 abuts against the first stationary positioning block 711 is switched to a case where the second rotation positioning surface 7212 abuts against the stationary positioning block 711. In that case, the second housing 2 is switched from the first position to the second position by rotation. Since the second rotation positioning surface 7212 abuts against the stationary positioning block 711 in the second position, the second housing 2 might not continue rotating and may remain in the second position. It can be understood that the rotation positioning assembly 7 can be in a form that a rotating shaft connecting structure fits a locking bolt, as long as the second housing 2 can be positioned after being rotated relative to the first housing 1, which will not be described in detail herein.

Referring to FIG. 6, in some examples, the rotation positioning assembly further includes a rotating bracket 73 fixedly connecting the rotating shaft rolling piece 71 with the first housing 1. Specifically, the rotating bracket 73 includes a bracket board 731 and two support bases 732, the bracket board 731 is fixedly connected with the two support bases 732, and the support bases 732 are fixed to the first housing 1 by bolts. An upper end of the bracket board 731 may be arc-shaped, and may be half-wrapped around one side of an outer wall of the rotating shaft rolling piece 71. An extension plate 713 is provided at a bottom of the rotating shaft rolling piece 71 and is fixedly connected with the bracket board 731 by bolts to achieve fixed connection between the rotating shaft rolling piece 71 and the first housing 1. Referring to FIG. 5, the rotating shaft rolling piece 71 is further provided with a decorative plate 712 wrapped around the other side of the rotating shaft rolling piece 71, and the decorative plate 712 is fixedly connected with the rotating shaft rolling piece 71 and the bracket board 731.

Referring to FIG. 7, in some examples, the rotation positioning assembly further includes a rotation fixing piece 74 fixed to the fixed block 722 and configured to be fixedly connected with the second housing 2. The rotating shaft piece 72 is fixedly connected with the second housing 2 through the rotating shaft fixing piece.

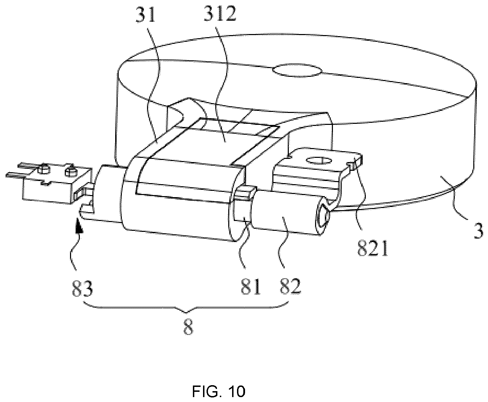

Referring to FIG. 10, FIG. 10 shows a schematic structural view of a turning assembly 8 in a wireless charger according to an example of the present disclosure. In some examples, the wireless charger further includes a turning assembly 8 disposed between the first housing 1 and the third housing 3, and a position of the third housing 3 is switched between the third position and the fourth position through (e.g., using) the turning assembly 8.

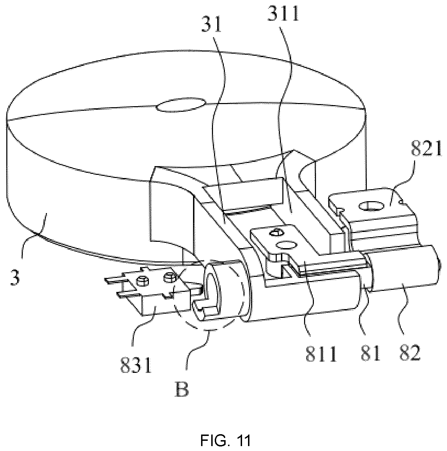

Referring to FIG. 10 and FIG. 11, FIG. 11 shows a schematic structural view of a wireless charger with a mounting cover plate 312 removed according to an example of the present disclosure. In some examples, the turning assembly 8 includes a turning shaft 81 and a turning sleeve 82. The turning shaft 81 is fixedly connected with the third housing 3, the turning sleeve 82 is fixedly connected with the first housing 1, and the turning shaft 81 is rotatably connected with the turning sleeve 82.

In some examples, the turning assembly 8 includes a first power supply protection assembly 83 disposed between the first housing 1 and the third housing 3. When the third housing 3 is in the third position, the first power supply protection assembly 83 is configured to cut off (e.g., block, disconnect) a third power supply circuit provided by the third wireless charging unit 6.

Specifically, the third housing 3 is provided with a turning cantilever 31 configured to be connected with the turning assembly 8. The turning cantilever 31 is provided with a mounting cavity 311 and a mounting cover plate 312 configured to close the mounting cavity 311. An outer wall of the turning sleeve 82 is fixedly provided with a first mounting plate 821 relatively fixedly connected with the first housing 1, so that the turning sleeve 82 is relatively fixedly connected with the first housing 1 through the first mounting plate 821. One end of the turning shaft 81 is in a cylindrical shape, extends into the turning sleeve 82, and is rotatably connected with the turning sleeve 82. The other end of the turning shaft 81 is in a square column shape and extends into the mounting cavity 311, and a second mounting plate 811 is fixed at the end of the turning shaft 81 in the square column shape, and the second mounting plate 811 is fixedly connected with the third housing 3 in the mounting cavity 311, so that the turning shaft 81 is relatively fixedly connected with the third housing 3 through the second mounting plate 811, thereby enabling the third housing 3 to turn relative to the first housing 1.

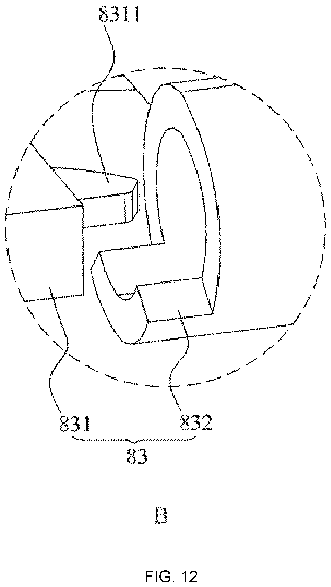

Referring to FIGS. 11 and 12, FIG. 12 shows a partially enlarged schematic view at B in FIG. 11. In some examples, the first power supply protection assembly 83 includes a first press-fit switch 831 and a turning triggering block 832. The first press-fit switch 831 is fixedly connected with the first housing 1, and the turning triggering block 832 is fixedly connected with the third housing 3. When the third housing 3 is in the third position, the turning triggering block 832 is separated from a first trigger 8311 provided on a side wall of the first press-fit switch 831, the first press-fit switch 831 is turned off, and the third power supply circuit is disconnected. When the third housing 3 is in the fourth position, the turning triggering block 832 abuts against the first trigger 8311 of the first press-fit switch 831, and the first press-fit switch 831 is turned on, and the third power supply circuit is connected.

Specifically, the turning triggering block 832 is fixedly disposed on an outer wall of the turning cantilever 31, and the first press-fit switch 831 is fixedly connected with the first housing 1. When the second included angle is 60 degrees, after the turning triggering block 832 is rotated 270 degrees, a case where the turning triggering block 832 is separated from the first press-fit switch 831 is switched to a case where the turning triggering block 832 abuts against the first press-fit switch 831, that is, the third housing 3 is switched from the third position to the fourth position through the turning.

If a coil of the third wireless charging unit 6 cannot stop working in time when the third housing 3 in the wireless charger is stored on the second surface 12 of the first housing 1, the coil of the third wireless charging unit 6 may heat up due to a metal medium covered thereon, resulting in burning out. The turning triggering block 832 is designed on the third housing 3 and can rotate together with turning of the third housing 3. When the third housing 3 is in the third position, (e.g., lied and stored on the second surface 12 of the first housing 1), the turning triggering block 832 is in an initial state, and the third power supply circuit provided by the third wireless charging unit 6 does not supply power. When the turning triggering block 832 turns to the fourth position along with the third housing 3, the turning triggering block 832 rotates together and triggers the first press-fit switch 831, and the third power supply circuit supplies power to the third wireless charging unit 6, so that the third wireless charging unit 6 operates normally.

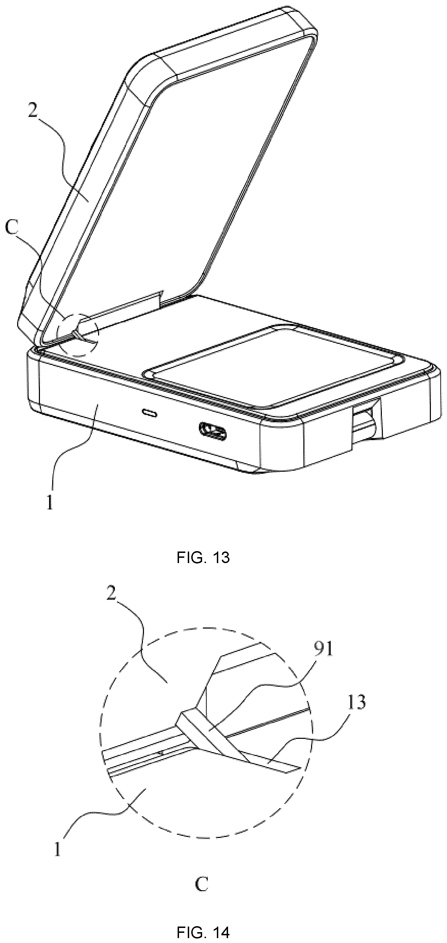

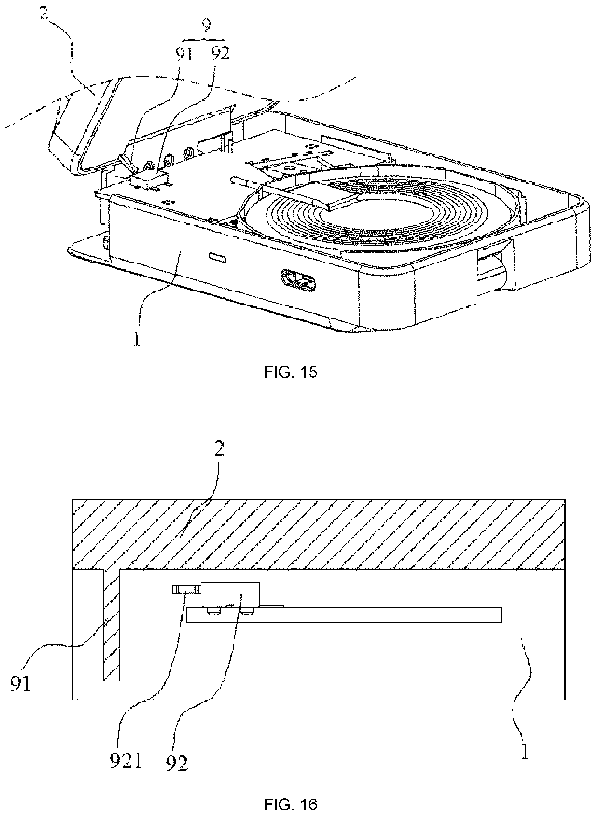

Referring to FIGS. 13, 14, and 15, FIG. 13 shows a schematic structural view showing a rotary swing arm 91 (e.g., a plate) embodied in a wireless charger according to an example of the present disclosure. FIG. 14 shows a partially enlarged schematic view at C in FIG. 13. FIG. 15 shows a schematic structural view of a second power supply protection assembly 9 embodied in a wireless charger according to an example of the present disclosure. In some examples, the wireless charger further includes a second power supply protection assembly 9. When the second housing 2 is in the first position, the second power supply protection assembly 9 is configured to cut off (e.g., block, disconnect) a first power supply circuit of the first wireless charging unit 4. When the second housing 2 is in the second position, the second power supply protection assembly 9 is configured to connect the first power supply circuit.

In some examples, the second power supply protection assembly 9 includes a rotary swing arm 91 and a second press-fit switch 92. The first surface 11 of the first housing 1 is provided with a press-fit through groove 13. One end of the rotary swing arm 91 is fixedly connected with the second housing 2, and the other end of the rotary swing arm extends into the first housing 1 through the press-fit through groove 13. The second press-fit switch 92 is connected to the first power supply circuit and is located inside the first housing 1.

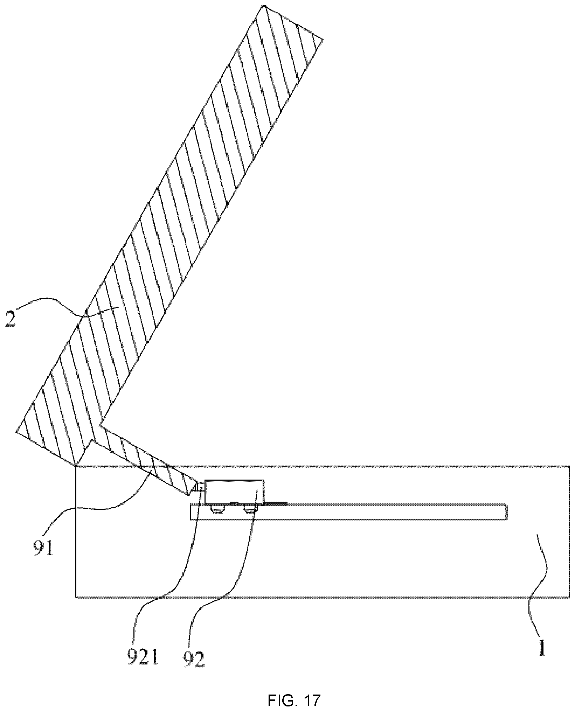

Referring to FIG. 16 and FIG. 17, FIG. 16 shows a schematic view of a rotary swing arm 91 in an initial position in a wireless charger according to an example of the present disclosure. FIG. 17 shows a schematic view of a rotary swing arm 91 in a triggered position in a wireless charger according to an example of the present disclosure. A side wall of the second press-fit switch 92 is provided with a second trigger 921 which is elastically connected with the second press-fit switch 92 and can retract after being press fit. When the second housing 2 is in the first position, the rotary swing arm 91 is separated from the second press-fit switch 92, the rotary swing arm 91 is in the initial position, the second press-fit switch 92 is turned off, and the first power supply circuit is disconnected. When the second housing 2 is in the second position, the rotary swing arm 91 abuts against the second trigger 921 of the second press-fit switch 92, and the second press-fit switch 92 is triggered on, and the first power supply circuit is connected. Specifically, the rotary swing arm 91 is fixedly connected with the second housing 2 and changes with a position of the second housing 2, so as to achieve triggering and control of the second press-fit switch 92.

If a coil of the first wireless charging unit 4 cannot stop working in time when the second housing 2 in the wireless charger is stored on the first surface 11 of the first housing 1, the coil of the first wireless charging unit 4 may heat up due to a metal medium covered thereon, resulting in burning out. The rotary swing arm 91 is designed on the second housing 2 and can be displaced with rotation of the second housing 2. When the second housing 2 is in the first position, that is, lied and stored on the first surface 11 of the first housing 1, the rotary swing arm 91 is in an initial state, and the first power supply circuit of the first wireless charging unit 4 does not supply power. When the rotary swing arm 91 rotates to the second position along with the second housing 2, the rotary swing arm 91 moves together and triggers the second press-fit switch, and the first power supply circuit supplies power to the first wireless charging unit 4, so that the first wireless charging unit 4 operates normally.

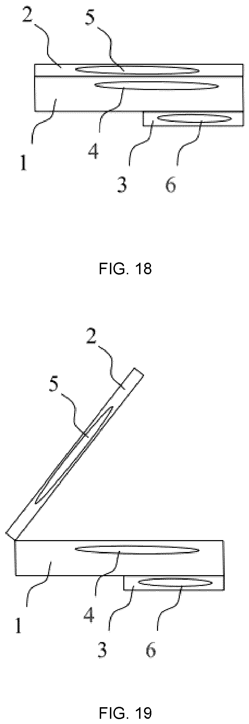

The wireless charger in the disclosure has a plurality of use states. Referring to FIG. 18, FIG. 18 shows a schematic view of a wireless charger in a fully folded storage state according to an example of the present disclosure. When the second housing 2 is in the first position and the third housing 3 is in the third position, the wireless charger is in the fully folded storage state. In this state, the second wireless charging unit 5 on the second housing 2 can perform wireless charging.

Referring to FIG. 19, FIG. 19 shows a schematic view of a wireless charger in a semi-folded storage state according to an example of the present disclosure. When the second housing 2 is in the second position and the third housing 3 is in the third position, the wireless charger is in the semi-folded storage state. In this state, the second wireless charging unit 5 on the second housing 2 can perform wireless charging; the first wireless charging unit 4 on the first housing 1 can perform wireless charging; and the first wireless charging unit 4 and the second wireless charging unit 5 can perform wireless charging at the same time.

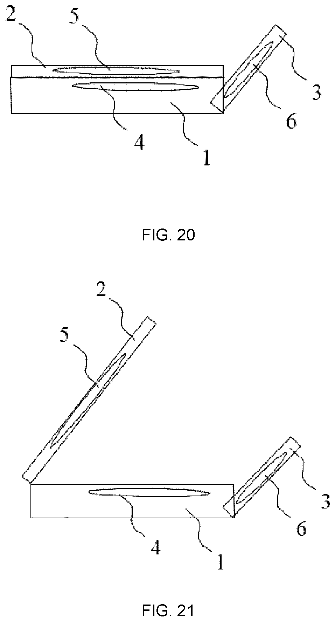

Referring to FIG. 20, FIG. 20 shows a schematic view of a wireless charger in another semi-folded storage state according to an example of the present disclosure. When the second housing 2 is in the first position and the third housing 3 is in the fourth position, the wireless charger is in another semi-folded storage state. In this state, the second wireless charging unit 5 on the second housing 2 can perform wireless charging; the third wireless charging unit 6 on the third housing 3 can perform wireless charging; and the second wireless charging unit 5 and the third wireless charging unit 6 can perform wireless charging at the same time.

Referring to FIG. 21, FIG. 21 shows a schematic view of a wireless charger in an unfolded storage state according to an example of the present disclosure. When the second housing 2 is in the second position and the third housing 3 is in the fourth position, the wireless charger is in the unfolded state, that is, in a fully unfolded state. In this state, the first wireless charging unit 4 on the first housing 1 can perform wireless charging; the second wireless charging unit 5 on the second housing 2 can perform wireless charging; the third wireless charging unit 6 on the third housing 3 can perform wireless charging; and the first wireless charging unit 4, the second wireless charging unit 5 and the third wireless charging unit 6 can perform wireless charging at the same time.

The wireless charger is compact in structure, small in volume after being folded, and can realize three-in-one multifunctional charging. An overall size thereof can be controlled as 89 mm*60 mm*25.5 mm, which is only a size of a playing card box, is much smaller than wireless chargers in the related art, and can even be called a pocket-size volume, which changes a viewpoint of users that wireless charging devices are not convenient to carry and solves pain points of users from a design source.

The wireless charger is convenient to carry and store, can be selectively unfolded into a plurality of use forms during use, and is more flexible and convenient to use.

The technical features of the above-mentioned examples can be combined in an arbitrary manner. For simplicity of description, not all of the possible combinations of the technical features in the examples described above are described, however, as long as there is no contradiction between these combinations of the technical features, the combinations should be considered as falling within the scope of this specification.

The above examples describe only several implementations of the present application, and their descriptions are specific and detailed, but cannot therefore be understood as limitations to the patent scope of the present application. It should be noted that those of ordinary skill in the art can make some variations and improvements without departing from the concept of the present application, and these variations and improvements all fall into the protection scope of the present application. Therefore, the protection scope of the present application should be subject to the appended claims.

Hereinafter, various characteristics will be highlighted. These characteristics are not to be interpreted as being limiting on the invention or inventive concept, but are provided merely as a highlighting of some characteristics as described herein, without suggesting a particular order of importance or relevancy of such characteristics.

According to an example, a wireless charger may comprise at least one of: a first housing comprising a first surface and a second surface; a second housing, the second housing being pivotably connected to the first housing and/or being movable between a first position and a second position wherein preferably the second housing at the first position is adjacent to the first surface of the first housing, and more preferably the second housing at the second position is angularly displaced from the first surface of the first housing.

The wireless charger may further comprise: a third housing, the third housing being pivotably connected to the first housing and/or being movable between a third position and a fourth position relative to the first housing, wherein preferably the third housing at the third position is adjacent to the second surface of the first housing and/or the third housing at the fourth position is angularly displaced from the first surface of the first housing.

The wireless charger may further comprising at least one of: a first wireless charging device in the first housing and configured to wirelessly charge a first electronic device located on the first surface of the first housing; a second wireless charging device in the second housing and configured to wirelessly charge a second electronic device; and a third wireless charging device in the third housing and configured to wirelessly charge a third electronic device.

The first housing and second housing may be pivotably connected by a rotation positioning assembly disposed between the first housing and the second housing.

The rotation positioning assembly may comprise at least one of: a rotating shaft rolling piece connected to the first housing and fixedly provided with a stationary positioning block; and a rotating shaft piece connected to the second housing, rotatably connected to the rotating shaft rolling piece, and provided with a follow-up positioning block, the follow-up positioning block comprising a first rotation positioning surface and a second rotation positioning surface; wherein: when the first rotation positioning surface abuts against the stationary positioning block, the second housing is in the first position; and when the second rotation positioning surface abuts against the stationary positioning block, the second housing is in the second position.

The rotation positioning assembly may further comprise a rotating bracket fixedly connecting the rotating shaft rolling piece with the first housing.

The rotation positioning assembly may further comprise a rotation fixing piece fixedly connecting the rotating shaft piece with the second housing.

The first housing and third housing may be pivotably connected by a turning assembly disposed between the first housing and the third housing.

The turning assembly may comprise: a turning shaft connected to the third housing and a turning sleeve connected to the first housing, the turning shaft preferably being rotatably connected to the turning sleeve.

The turning assembly may further comprise a first power supply protection assembly. When the third housing is in the third position, the first power supply protection assembly may be configured to disconnect a third power supply circuit associated with the third wireless charging device.

The first power supply protection assembly may comprise at least one of: a first press-fit switch connected to the first housing and connected to the third power supply circuit; and a turning triggering block connected to the third housing. When the third housing is in the first position, the turning triggering block may be separated from the first press-fit switch and/or the first press-fit switch may be turned off and/or the third power supply circuit may be disconnected. When the third housing is in the second position, the turning triggering block may abut against the first press-fit switch and/or the first press-fit switch may be turned on and/or the third power supply circuit may be connected.

The wireless charger may further comprise a second power supply protection assembly. When the second housing is in the first position, the second power supply protection assembly may be configured to disconnect a first power supply circuit provided by the first wireless charging device. When the second housing is in the second position, the second power supply protection assembly may be connected to the first power supply circuit.

The second power supply protection assembly may comprise at least one of: a rotary swing arm fixedly connected with to the second housing; and a second press-fit switch connected to the first power supply circuit. When the second housing is in the first position, the rotary swing arm may be separated from the second press-fit switch and/or the second press-fit switch may be turned off and/or the first power supply circuit may be disconnected. When the second housing is in the second position, the rotary swing arm may abut against the second press-fit switch and/or the second press-fit switch may be turned on and/or the first power supply circuit may be connected.

In another example, a foldable wireless charger may comprise: a first housing comprising an inner surface and an outer surface; a second housing, the second housing being pivotably connected to the first housing to be movable between a closed position and an open position, the inner surface of the first housing being exposed when the second housing is in the open position; and a third housing, the third pivotably connected to the first housing to be movable between a retracted position and an extended position, wherein each of the first, second, and third housings has at least one respective wireless charging device configured to wirelessly charge an electronic device.

The first housing may comprise a storage recess. The third housing may be at least partially located within the storage recess when the third housing is in the retracted position and/or spaced from the storage recess when the third housing is in the extended position.

The first housing may comprise a storage recess. The third housing may be at least partially located within the storage recess when the third housing is in the retracted position and/or be spaced from the storage recess when the third housing is in the extended position.

In another example, a foldable wireless charger may comprise: a first housing comprising a first surface and a second surface; a second housing pivotably connected to the first housing and having a first position and a second position relative to the first housing, wherein the second housing is in a folded state when the second housing is in the first position, and the second housing is in an unfolded state when the second housing is in the second position; and a third housing pivotably connected to the first housing and having a third position and a fourth position relative to the first housing, wherein the third housing is folded at the second surface of the first housing at the third position, and the third housing is in an unfolded state at the fourth position.

In another example, a wireless charger may comprise: a first housing provided with a first surface and a second surface; a second housing movably connected to the first housing and having a first position and a second position relative to the first housing, wherein when the second housing is in the first position, the second housing fits the first surface; when the second housing is in the second position, the second housing is separated from the first surface; a third housing movably connected to the first housing and having a third position and a fourth position relative to the first housing, wherein when the third housing is in the third position, the third housing fits the second surface; when the third housing is in the fourth position, the third housing moves to a side of the first surface of the first housing; a first wireless charging unit disposed on the first housing and configured to wirelessly charge a first device to be charged on the first surface; a second wireless charging unit disposed on the second housing and configured to wirelessly charge a second device to be charged on the second housing; and a third wireless charging unit disposed on the third housing and configured to wirelessly charge a third device to be charged on the third housing.

## Claims

1. A wireless charger comprising:
- a first housing comprising a first surface and a second surface;
- a second housing, the second housing being pivotably connected to the first housing and being movable between a first position and a second position wherein the second housing at the first position is adjacent to the first surface of the first housing, and the second housing at the second position is angularly displaced from the first surface of the first housing;
- a third housing, the third housing being pivotably connected to the first housing and being movable between a third position and a fourth position relative to the first housing, wherein the third housing at the third position is adjacent to the second surface of the first housing, and the third housing at the fourth position is angularly displaced from the first surface of the first housing;
- a first wireless charging device in the first housing and configured to wirelessly charge a first electronic device located on the first surface of the first housing;
- a second wireless charging device in the second housing and configured to wirelessly charge a second electronic device; and
- a third wireless charging device in the third housing and configured to wirelessly charge a third electronic device.

2. The wireless charger according to claim 1, wherein the first housing and second housing are pivotably connected by a rotation positioning assembly disposed between the first housing and the second housing.

3. The wireless charger according to claim 1 or 2, wherein the rotation positioning assembly comprises:
- a rotating shaft rolling piece connected to the first housing and fixedly provided with a stationary positioning block; and
- a rotating shaft piece connected to the second housing, rotatably connected to the rotating shaft rolling piece, and provided with a follow-up positioning block, the follow-up positioning block comprising a first rotation positioning surface and a second rotation positioning surface; wherein:
- when the first rotation positioning surface abuts against the stationary positioning block, the second housing is in the first position; and
- when the second rotation positioning surface abuts against the stationary positioning block, the second housing is in the second position.

4. The wireless charger according to claim 3, wherein the rotation positioning assembly further comprises a rotating bracket fixedly connecting the rotating shaft rolling piece with the first housing.

5. The wireless charger according to claim 3 or 4, wherein the rotation positioning assembly further comprises a rotation fixing piece fixedly connecting the rotating shaft piece with the second housing.

6. The wireless charger according to any one of claims 1 to 5, wherein the first housing and third housing are pivotably connected by a turning assembly disposed between the first housing and the third housing.

7. The wireless charger according to claim 6, wherein the turning assembly comprises:
- a turning shaft connected to the third housing, and
- a turning sleeve connected to the first housing, the turning shaft being rotatably connected to the turning sleeve.

8. The wireless charger according to claim 6 or 7, wherein the turning assembly further comprises a first power supply protection assembly, and when the third housing is in the third position, the first power supply protection assembly is configured to disconnect a third power supply circuit associated with the third wireless charging device.

9. The wireless charger according to claim 8, wherein the first power supply protection assembly comprises:
- a first press-fit switch connected to the first housing and connected to the third power supply circuit; and
- a turning triggering block connected to the third housing; wherein:
- when the third housing is in the first position, the turning triggering block is separated from the first press-fit switch, the first press-fit switch is turned off, and the third power supply circuit is disconnected; and
- when the third housing is in the second position, the turning triggering block abuts against the first press-fit switch, the first press-fit switch is turned on, and the third power supply circuit is connected.

10. The wireless charger according to any one of claims 1 to 9, further comprising a second power supply protection assembly, wherein:
- when the second housing is in the first position, the second power supply protection assembly is configured to disconnect a first power supply circuit provided by the first wireless charging device; and
- when the second housing is in the second position, the second power supply protection assembly is connected to the first power supply circuit.

11. The wireless charger according to claim 10, wherein the second power supply protection assembly comprises:
- a rotary swing arm connected to the second housing; and
- a second press-fit switch connected to the first power supply circuit; wherein:
- when the second housing is in the first position, the rotary swing arm is separated from the second press-fit switch, the second press-fit switch is turned off, and the first power supply circuit is disconnected; and
- when the second housing is in the second position, the rotary swing arm abuts against the second press-fit switch, the second press-fit switch is turned on, and the first power supply circuit is connected.

12. The wireless charger according to any one of claims 1 to 11, wherein the first position is an open position, and the first surface of the first housing is exposed when the second housing is in the open position.

13. The wireless charger according to any one of claims 1 to 12, wherein the first housing comprises a storage recess, and wherein the third housing is at least partially located within the storage recess when the third housing is in the third position and spaced from the storage recess when the third housing is in the fourth position.

14. The wireless charger according to any one of claims 1 to 13, wherein the first housing comprises first and second opposing ends, and wherein the second housing is pivotably coupled to the first end of the first housing, and the third housing is pivotably coupled to the second end of the first housing.

15. The wireless charger according to any one of claims 1 to 14, wherein the first position is a folded state and the second position is an unfolded state.
